# FASCICULE DE BREVET EUROPEEN

(11) **EP 3 556 151 B1**
(45) Date de publication et mention de la délivrance du brevet: **21.09.2022**
(21) Numéro de dépôt: 17829227.2
(22) Date de dépôt: 15.12.2017
(51) Int. Cl.: H04W 52/14, H04W 52/22, H04W 52/28, H04W 48/08, H04W 4/02, H04W 12/02, H04W 12/03

(54) **PROCÉDÉ DE CONTRÔLE D'UN SIGNAL RADIO ÉMIS PAR UN OBJET CONNECTÉ, PASSERELLE ET PROGRAMME D'ORDINATEUR CORRESPONDANTS**
VERFAHREN ZUR STEUERUNG EINES VON EINEM VERBUNDENEN OBJEKT GESENDETEN FUNKSIGNALS, ENTSPRECHENDES GATEWAY UND COMPUTERPROGRAMM
METHOD FOR CONTROLLING A RADIO SIGNAL EMITTED BY A CONNECTED OBJECT, AND CORRESPONDING GATEWAY AND COMPUTER PROGRAM

(30) Priorité: 15.12.2016 FR 1662475
(43) Date de publication de la demande: 23.10.2019
(73) Titulaire: Orange, 92130 Issy-les-Moulineaux (FR)
(72) Inventeur: BOUCADAIR, Mohamed, 92326 Châtillon Cedex (FR); JACQUENET, Christian, 92326 Châtillon Cedex (FR)
(86) Numéro de dépôt international: PCT/FR2017/053617
(87) Numéro de publication internationale: WO 2018/109419

(56) Documents cités:
- WO-A1-2011/124810
- US-A1- 2009 286 496
- US-A1- 2015 271 764

## Description

### Domaine de l'invention

Le domaine de l'invention est celui des télécommunications et plus particulièrement celui de l'adaptation de la portée du signal radio émis par une passerelle résidentielle ou des objets connectés (contexte de services déployés sur l'Internet des objets (Internet of Things)).

L'invention trouve donc des applications dans tout réseau de communication mettant en œuvre au moins une passerelle résidentielle (domestique ou d'entreprise) disposant d'un ou plusieurs composants radio de nature à émettre et recevoir des ondes de nature diverse : Wi-Fi, Bluetooth, NFC (Near Field Communication), 4G (3GPP LTE version 13 et au-delà), LoRa^{®} WAN (Long Range Wide-area Network)), etc.).

### Art antérieur

Le réseau IP (« Internet Protocol ») est le support universel d'une multitude de services et applications. Un exemple est fourni dans le document US2015/0271764.

Pour accéder à ces services ou applications, une passerelle résidentielle, encore appelée « box », HG pour « Home Gateway » ou CPE pour « Customer Premises Equipment », est classiquement installée chez un utilisateur. En d'autres termes, une passerelle résidentielle sert d'interface entre le réseau local de l'utilisateur et le réseau IP d'un opérateur. C'est donc l'élément concentrateur par lequel transite l'ensemble des connexions, le trafic caractéristique des différents services souscrits par le client, et qui supporte également un ensemble d'applications fournies par un opérateur de télécommunications.

Par exemple, une passerelle résidentielle permet à un utilisateur d'accéder à de multiples services IP permettant simultanément un accès à Internet, à des contenus vidéo (dont la diffusion de programmes télévisés) et à des services de voix (téléphonie sur IP, par exemple). L'offre commerciale correspondante est classiquement dite Triple Play et de manière plus large Multi-play.

En matière de connectivité, la passerelle résidentielle est raccordée d'un côté au réseau de l'opérateur et fournit côté client un ensemble d'interfaces variées : interfaces sans fil (par ex. WLAN, Bluetooth (marque déposée), etc.), prise RJ11 pour la téléphonie, prises RJ45 pour la télévision numérique et les ordinateurs, prises USB (Universal Serial Bus), port Ethernet.

Outre la fourniture de l'accès à l'ensemble des services (data, vidéo, voix) souscrits par le client, la passerelle résidentielle est également impliquée dans la gestion des fonctions qu'elle supporte (par exemple gestion des règles de translation d'adresses NAT (Network Address Translator), des filtres du pare-feu, etc.).

En matière d'applicatifs, la passerelle résidentielle intègre les logiciels utilisés pour les opérations de maintenance de la passerelle.

Un utilisateur qui veut accéder à Internet depuis un terminal, le fait très souvent en utilisant une communication sans fil, généralement de type IEEE 802.11 dit Wi-Fi (marque déposée), établie entre son terminal et sa passerelle résidentielle.

Une telle passerelle comprend une interface d'administration, généralement accessible par le protocole HTTP *(HyperText Transfer Protocol)* mais cette interface est peu connue de la plupart des utilisateurs.

L'émergence des services reposant sur l'Internet des objets (IoT) est de nature à provoquer des failles sécuritaires importantes. En particulier, l'ensemble des services reposant sur l'exploitation d'objets connectés en réseau (réseau de capteurs de détection de mouvement, de détection de fumée, réseau de capteurs destinés à piloter le système d'éclairage d'une résidence, services de télémédecine reposant sur des capteurs destinés à surveiller en permanence un ensemble de données biométriques, etc.) soulève inévitablement la question de la protection des données personnelles mais aussi de l'envoi d'instructions qui peuvent perturber le fonctionnement de ces objets dans leur environnement nominal.

En effet, la grande majorité des objets connectés embarquent des composants radio d'émission et de réception qui leur permettent de traiter les commandes en provenance d'un contrôleur (par exemple, un Smartphone, une console locale, etc.) connecté quelque part sur l'Internet ou à l'intérieur de la zone de service délimitée par la portée du signal radio émis par la passerelle. Les composants radio sont également utilisés par ces objets connectés pour transmettre à un contrôleur soit de façon régulière (par exemple, collecte mensuelle du compteur d'électricité), soit de manière spontanée (par exemple, envoi d'une notification à un contrôleur lorsqu'un seuil de données biométriques est sur le point d'être dépassé) l'ensemble des données qu'ils ont collectées. Ainsi, ces composants sont utilisés pour recevoir des instructions depuis un contrôleur telles que des instructions de mise en service, de mise en veille, etc.

Il est à ce titre primordial de préserver la confidentialité des données transmises ou reçues par ces objets connectés localisés au sein d'une zone de service. Et il est primordial de s'assurer en particulier que les transmissions radio ne constituent pas un vecteur d'attaque de nature à provoquer le vol de ces données, à remettre en cause l'intégrité de ces données par des utilisateurs malveillants ou à commander d'une manière frauduleuse un objet connecté pour qu'il exécute des actions de nature contradictoire à son fonctionnement nominal et pouvant remettre en cause le bon fonctionnement du service fourni par l'objet.

Un risque emblématique (et avéré) de telles failles sécuritaires est celui lié à la présence d'une personne disposant d'un smartphone embarquant une fonction « contrôleur » capable de commander des objets connectés à proximité d'une résidence au sein de laquelle un réseau d'objets connectés (lampes) reposant sur la spécification LoRa ^{®} est déployé pour gérer le système d'éclairage : cette personne a théoriquement la capacité de piloter le système d'éclairage de ladite résidence à sa guise, pour peu que les objets connectés se situent à portée de commande du contrôleur de cette personne. Dans ce contexte, la zone de service correspondant à la portée des signaux émis par les objets connectés ne peut se résumer à un espace isotrope : la gestion contrôlée de la portée des signaux émis par de tels objets doit reposer sur une direction privilégiée de l'espace utilisé par les objets et leur contrôleur. Ces informations peuvent être échangées lors la première mise en service d'un objet connecté.

Ces failles de sécurité ont été révélées récemment lors d'une expérimentation avec un drone positionné à proximité de bâtiments équipés de lampes connectées. Des instructions ont été transmises par le drone aux lampes telles que : « éteindre toutes les lampes d'un étage, éteindre une partie des lampes, etc. ». Une attaque de ce type, menée en 2016, a fait l'objet d'articles dont celui accessible à l'adresse https://www.engadget.com/2016/11/03/hackers-hijack-a-philips-hue-lights-with-a-drone/. L'événement a été rapporté par le New York Times dans un article posté en ligne le 3 novembre 2016, et accessible à l'adresse http://www.nytimes.com/2016/11/03/technology/why-light-bulbs-may-be-the-next-hacker-target.html? r-0. Les produits visés dans cette attaque sont des lampes « Hue lights » commandées via une communication sans fil de type Zigbee. L'attaque a permis de montrer qu'en utilisant un drone situé à proximité de l'une des lampes, il avait été possible de répandre un virus contaminant dans le réseau de lampes et de commander ainsi l'allumage et l'extinction des lampes à partir d'un dispositif embarqué sur le drone.

Une telle attaque ciblait des lampes mais d'autres objets peuvent être visés.

De nombreux articles tels que l'article « *The Internet of Things Is Wildly Insecure -And Often Unpatchable* » accessible à l'adresse https://www.schneier.com/essays/archives/2014/01/the internet of thin.html et l'article accessible à l'adresse https://events.ccc.de/congress/2014/Fahrplan/events/6166.html font en outre état de la défaillance des solutions envisagées qui reposent sur des mécanismes de sécurité plus robustes ou sur un logiciel embarqué dans l'objet connecté pouvant être mis à jour régulièrement pour résoudre une faille sécuritaire. Cependant, il a été rapporté que le processus de mise à jour peut être défaillant et que les technologies actuelles ne supportent pas ou mal les fonctions requises pour ces solutions. **Il** faut noter que certaines implémentations utilisent des modèles de sécurité «simplifiés/simplistes» qui rendent la réalisation d'attaques possible. Par exemple, l'article *« Hacking into Internet Connected Light Bulbs* » accessible à l'adresse https://www.contextis.com//resources/blog/hacking-internet-connected-light-bulbs/» expose comment le choix d'une même clé de sécurité avec un algorithme de chiffrement AES (Advanced Encryption Standard) peut sévèrement pénaliser le fonctionnement d'un réseau d'objets connectés.

### Exposé de l'invention

L'invention a pour objet un procédé selon la revendication 1.

La zone est par défaut la zone couverte par le dispositif. Ce dispositif est par exemple une passerelle et cette passerelle embarque le contrôleur. Chaque passerelle, résidentielle ou pas, peut enregistrer des saisies d'un utilisateur. En particulier, la passerelle résidentielle enregistre une donnée descriptive de l'environnement de l'utilisateur de cette passerelle. La donnée descriptive de l'environnement peut consister en une information de dimension de l'environnement de l'utilisateur. Par exemple, il s'agit d'une distance entre la passerelle résidentielle et les murs extérieurs de la résidence de l'utilisateur. Cette distance délimite un volume considéré comme l'environnement de l'utilisateur qui détermine la zone.

Ainsi, connaissant la zone, la passerelle peut automatiquement ajuster sa portée à la limite de cette zone. En effet, connaissant sa puissance émise et un modèle de propagation, la passerelle peut déterminer la puissance à la limite de la zone. La passerelle peut ensuite ajuster la puissance émise pour que la puissance en limite de zone soit inférieure à un seuil minimal de réception admissible par un terminal qui veut s'associer à la passerelle.

Ainsi, même si un équipement électronique, par exemple un drone, peut s'approcher en limite de la zone, la résidence par exemple, il ne peut pas s'associer à la passerelle compte tenu que le signal rayonné à cette limite est inférieur au niveau de signal nécessaire pour établir une connexion.

Le dispositif peut être un objet connecté à un réseau local et contrôlé par un contrôleur. Une passerelle peut embarquer le contrôleur du dispositif ou être connectée à un tel contrôleur embarqué dans un équipement électronique tel un smartphone. La zone de rayonnement de l'objet peut alors correspondre à la zone déterminée, à une sous-zone de la zone déterminée ou à une zone différente. La zone de service de l'objet connecté peut être définie indépendamment de la zone de service d'une passerelle. Le procédé peut être activé par un objet connecté avec ou sans la présence d'une passerelle dans l'environnement utilisateur.

L'invention a en outre pour objet une passerelle, selon la revendication 13, destinée à être connectée à un réseau de communication. La passerelle comprend :
- des moyens d'émission et de réception d'un signal radio,
- une mémoire pour mémoriser des données descriptives de l'environnement résidentiel d'un utilisateur de la passerelle définissant une zone,
- un calculateur pour déterminer le niveau de signal à la limite de la zone et pour comparer ce niveau à un seuil, le calculateur étant programmé pour commander l'adaptation de la portée du signal radio émis par la passerelle si le seuil est dépassé.

L'invention a en outre pour objet un système de communication comprenant une passerelle résidentielle pour le contrôle d'un signal radio émis par la passerelle. Le système est tel que la passerelle est selon un objet précédent.

Le procédé proposé apporte ainsi une solution robuste pour limiter les attaques contre un objet connecté (ou un ensemble d'objets connectés) sans faire d'hypothèse quant à la robustesse du mécanisme de sécurité supporté ni sur le cycle de maintenance logicielle en contrôlant la portée des communications d'un tel objet connecté.

Selon un mode de réalisation de l'invention, la zone est déterminée en recevant et utilisant des informations de localisation transmises par un terminal mobile déplacé entre des points à la limite de la zone à délimiter.

Selon un mode de réalisation de l'invention, une passerelle résidentielle embarque le contrôleur.

Selon un mode de réalisation de l'invention, le procédé comprend en outre :
- enregistrement par la passerelle de données descriptives d'un environnement d'un utilisateur de cette passerelle pour déterminer les limites de la zone.

Selon un mode de réalisation de l'invention, le procédé comprend en outre :
- envoi d'une requête demandant sa localisation à tout terminal cherchant à s'associer à la passerelle,
- autorisation de l'association du terminal à la passerelle uniquement s'il est localisé dans la zone.

Selon un mode de réalisation de l'invention, le procédé comprend en outre :
- réception d'une requête d'association provenant d'un terminal comprenant la localisation de ce terminal,
- autorisation de l'association du terminal à la passerelle uniquement s'il est localisé dans la zone.

Selon un mode de réalisation de l'invention, le procédé comprend en outre :
- enregistrement par la passerelle résidentielle de préférences d'un utilisateur sur son environnement.

Chaque passerelle, résidentielle en particulier, peut enregistrer des préférences de l'utilisateur quant à son environnement. Les préférences sur l'environnement ont pour fonction de préciser des modalités de rayonnement de la passerelle résidentielle. Ainsi, l'utilisateur peut par exemple définir une plage horaire de rayonnement ou de non rayonnement de sa passerelle résidentielle ainsi qu'une durée de validité de ces préférences (période hors week-end). Les préférences ont des valeurs par défaut. Par défaut, elles peuvent autoriser l'adaptation de la portée (puissance, fréquence, gain d'antenne, etc.).

Selon un mode de réalisation de l'invention le dispositif est un objet connecté. Le procédé comprend en outre :
- fourniture par le contrôleur à l'objet d'informations sur sa localisation,
- rejet par l'objet de toute requête ou commande venant du contrôleur si ce dernier est localisé en dehors de la zone déterminée.

Selon un mode de réalisation de l'invention, le dispositif embarque le contrôleur.

Selon un mode de réalisation de l'invention, la comparaison à un seuil est répétée.

La répétition de la comparaison à des instants plus ou moins réguliers permet une adaptation à des changements dans l'environnement, par exemple le déplacement d'un meuble qui a pour effet d'augmenter ou de diminuer l'atténuation du signal émis et donc de modifier la portée.

Une passerelle résidentielle selon l'invention est notamment adaptée à mettre en œuvre le procédé tel que décrit précédemment. Ainsi, une telle passerelle peut présenter les différentes caractéristiques relatives au procédé selon l'invention, ces caractéristiques pouvant être combinées ou prises isolément.

L'invention a en outre pour objet un ou plusieurs programmes d'ordinateur, selon la revendication 15, comportant des instructions pour la mise en œuvre d'au moins un procédé tel que décrit ci-dessus, lorsque ce ou ces programmes sont exécutés par un processeur.

L'invention a en outre pour objet un ou plusieurs supports d'informations, inamovibles, ou partiellement ou totalement amovibles, lisibles par un ordinateur, et comportant des instructions d'un ou plusieurs programmes d'ordinateur pour l'exécution des étapes d'au moins un procédé tel que décrit ci-dessus.

Les procédés selon l'invention peuvent donc être mis en œuvre de diverses manières, notamment sous forme câblée et/ou sous forme logicielle.

### Liste des figures

D'autres caractéristiques et avantages de l'invention apparaîtront plus clairement à la lecture de la description suivante de modes de réalisation particuliers donnés à titre de simples exemples illustratifs et non limitatifs et des dessins annexés, parmi lesquels :
- la figure 1 est un schéma illustrant la zone de rayonnement ou zone de service d'une passerelle Wi-Fi,
- la figure 2 est un organigramme des principales étapes d'un procédé selon l'invention,
- les figures 3a-3d représentent des schémas illustrant un mode de réalisation selon lequel la récupération de coordonnées de localisation d'un traceur associé à la passerelle permet de délimiter la zone,
- la figure 4 est un schéma illustrant la zone de rayonnement par défaut d'une passerelle Wi-Fi et la zone après optimisation, i.e., l'adaptation de sa portée et le positionnement de deux terminaux dont un TI (Terminal Interne) est dans la zone optimisée et l'autre TE (Terminal Externe) est hors de la zone optimisée,
- les figures 5 et 6 sont des schémas d'échanges protocolaires selon des modes de réalisation de l'invention selon lesquels le procédé exige les coordonnées géographiques du terminal lors de son attachement au réseau ou les coordonnées géographiques du contrôleur lors de son association avec un objet connecté,
- la figure 7 est un schéma illustrant un mode de réalisation du procédé selon lequel des flux de terminaux sont redirigés vers un serveur en application de règles *(policy),*
- la figure 8 est un schéma de la structure simplifiée d'une passerelle résidentielle selon l'invention adaptée à mettre en œuvre un procédé de contrôle selon l'invention.

### Description de modes de réalisation de l'invention

Le principe général de l'invention repose sur l'adaptation de la portée du signal émis par un dispositif, en particulier une passerelle ou un objet connecté, pour diminuer le risque d'utilisation frauduleuse par un dispositif tiers. Un dispositif tiers peut être un drone qui s'approche à distance ou au plus près de l'environnement résidentiel. L'optimisation de la couverture à l'environnement résidentiel de l'utilisateur de la passerelle permet déjà de diminuer le risque précédent. La couverture peut bien entendu être limitée à une zone qui n'est pas identique à la résidence mais plus réduite ou plus étendue. Par exemple, cette zone peut être limitée à une pièce ou étendue à plusieurs pièces de plusieurs appartements.

La diminution de la portée du rayonnement revient à diminuer le niveau de signal pouvant être détecté dans cet environnement résidentiel. La zone couverte peut être restreinte, étendue, voire focalisée et donc la portée adaptée en modifiant par exemple la puissance émise, la fréquence d'émission ou par exemple en effectuant de la formation de voies ou du codage spatial. Le contrôle de la zone de couverture peut ainsi être réalisé à l'aide d'une pluralité d'antennes unidirectionnelles. Il peut bien entendu être mis en œuvre une combinaison de ces moyens pour adapter la zone couverte et donc la portée.

Ainsi, le contrôle du signal émis permet d'adapter la portée de ce signal et donc la zone couverte pour couvrir une zone de service dite optimale. La diminution de la portée peut ainsi permettre que l'énergie rayonnée ne soit plus suffisante pour qu'un dispositif tel qu'un drone puisse détecter le signal et se connecter de manière frauduleuse à un réseau distant via la passerelle ou seulement s'introduire dans un réseau local accessible via la passerelle.

La passerelle résidentielle peut en outre prendre en compte des préférences de rayonnement sur son environnement telles qu'exprimées par son utilisateur pour adapter la portée de son signal émis. La zone de rayonnement peut devenir nulle en coupant l'émission du signal, par exemple la nuit.

L'invention est décrite de manière plus détaillée dans le contexte d'une passerelle Wi-Fi, c'est-à-dire émettant un signal conforme à au moins l'un des standards de la famille IEEE802.11.

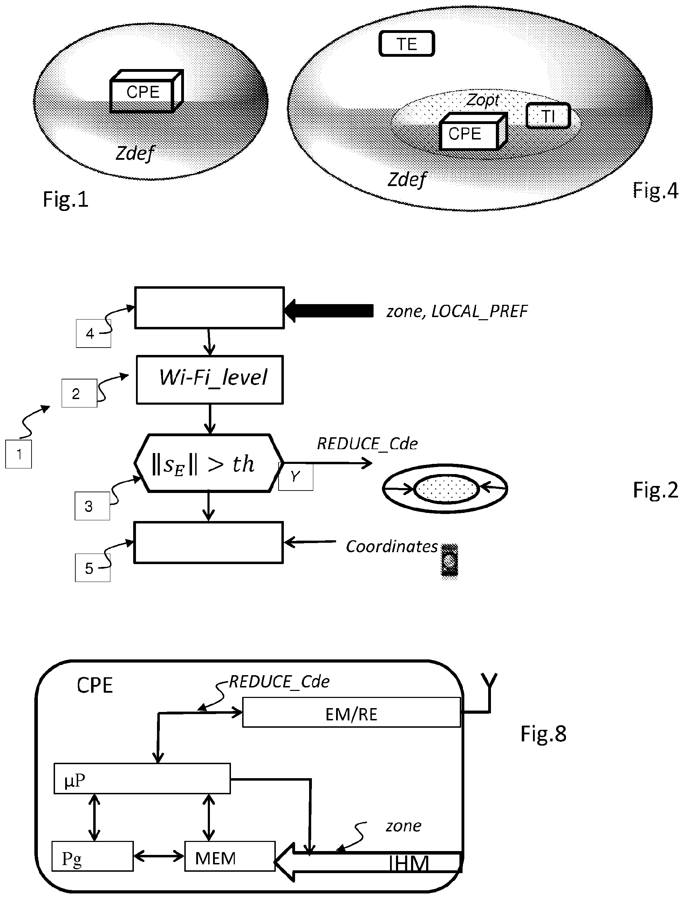

La figure 1 illustre de manière schématique la zone de service *Zdef* ou zone couverte par une passerelle qui définit la portée de cette passerelle. Il est bien entendu qu'en réalité la couverture ou portée ne suit pas une forme géométrique parfaite comme représentée sur la figure mais a un profil irrégulier qui dépend de l'environnement : murs, planchers, nature des murs et des planchers, distance aux murs, etc.

Les principales étapes de l'invention sont illustrées par l'organigramme de la figure 2. La description qui suit considère que le dispositif et la passerelle se confondent sauf indication contraire.

Le procédé 1 contrôle le signal radio émis par une passerelle CPE pour adapter sa portée. Il est bien entendu qu'une passerelle peut émettre plusieurs signaux radio différents et qui peuvent être simultanés en fonction des capacités de la passerelle. Par exemple, la passerelle peut émettre un signal de type Wi-Fi simultanément avec un signal de type Bluetooth ou Zigbee. Le procédé peut être déployé pour contrôler plusieurs signaux émis par la même passerelle.

Le procédé 1 comprend la détermination 2 par la passerelle d'un niveau *Wi-Fi_level* de signal radio émis en limite d'une zone déterminée. Comme indiqué précédemment, selon un mode de réalisation le signal est celui émis par la passerelle. Selon un autre mode de réalisation, la passerelle contrôle le signal émis par un dispositif distinct. La fonction de détermination de la portée d'une interface radio locale et la fonction du contrôle d'une interface embarquée dans un équipement tiers peuvent être co-localisées ou embarquées dans des équipements différents.

Selon un mode de réalisation, la passerelle affiche une zone, qui est par défaut la zone de couverture Wi-Fi. Généralement, une interface homme machine (IHM) peut permettre la saisie par l'utilisateur de données descriptives de l'environnement qui définissent la zone à prendre en compte. Selon un autre mode, les données descriptives sont récupérées par l'intermédiaire d'une communication avec un traceur déplacé en limite de la zone à couvrir. D'autres interfaces de gestion peuvent être utilisées telles qu'un écran d'affichage en façade d'une passerelle ou une paire de lunettes intelligentes associée à la passerelle résidentielle. La passerelle peut être connectée à un ou plusieurs dispositifs ayant une interface homme machine et/ou une interface graphique telle un écran de télévision, un PC, une tablette, un smartphone sur laquelle la zone peut éventuellement être affichée et au moyen desquelles l'utilisateur peut effectuer la saisie via une télécommande, un clavier, etc.

Connaissant la zone, sa puissance émise et un modèle de propagation, la passerelle détermine le niveau de puissance émise à une distance qui correspond à la limite de la zone.

Le procédé 1 comprend en outre la comparaison 3 du signal émis en limite de zone à un seuil déterminé : ∥*s_{E}*∥ > *th.* Et si *Y* le signal émis *s_{E}* dépasse le seuil *th* alors la passerelle CPE commande *REDUCE_Cde* une adaptation de la portée du signal radio émis. La valeur du seuil peut être par défaut le seuil minimal de détection fixé par exemple dans un des standards IEEE 802.11.

Le procédé 1 peut en outre comprendre l'enregistrement 4 par la passerelle CPE de données *zone* descriptives d'un environnement d'un utilisateur de cette passerelle.

Selon un mode de réalisation, l'utilisateur peut saisir des données descriptives de la résidence. L'utilisateur peut être plural, il ne s'agit pas forcément de la même personne physique qui utilise la passerelle et qui saisit les données de description. Les données descriptives de l'environnement permettent de déterminer les contours de l'environnement de l'utilisateur à considérer. Les données peuvent comprendre un type de résidence (maison, appartement), un nombre de pièces à considérer, une surface globale au sol à considérer, un nombre d'étages à considérer, un nombre de pièces par étage à considérer, la localisation de la passerelle dans la résidence, etc. La limite de la zone est identifiée aux contours de l'environnement.

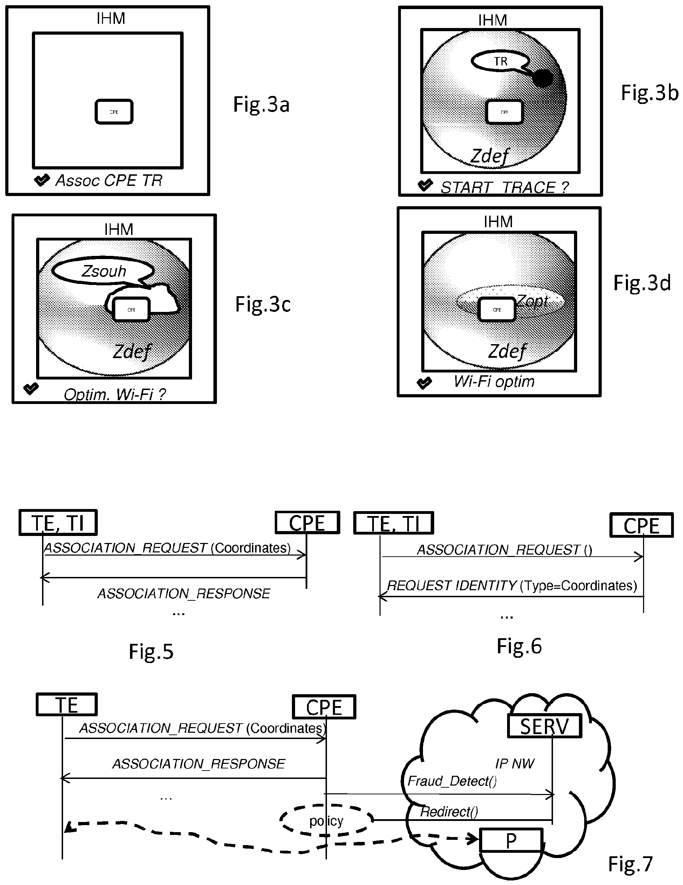

Selon un autre mode de réalisation illustré par les figures 3a-3d, la passerelle peut proposer à l'utilisateur via une interface de gestion IHM un mode qui repose sur la récupération de coordonnées de localisation d'un terminal mobile ou traceur TR associé à la passerelle CPE. Ce traceur peut être un client Wi-Fi embarqué dans un terminal existant (smartphone, PC portable) ou transporté par un drone, ou peut être un équipement dédié qui s'associe avec la passerelle CPE pour le seul besoin du calibrage Wi-Fi. Selon ce mode, une fois l'association *Assoc CPE TR* établie entre la passerelle CPE et le traceur, l'utilisateur est invité *START TRACE* ? à déplacer ou faire déplacer le traceur pour délimiter les contours de l'environnement et définir ainsi les données *zone.* Ainsi, le traceur transmet régulièrement ses nouvelles coordonnées de localisation par exemple GPS (Global Positioning System) (ou des coordonnées ayant comme référence la localisation de la passerelle) qui permettent à la passerelle CPE de déterminer les contours de l'environnement et donc la limite de la zone de service souhaitée *Zsouh.* Connaissant sa localisation, par exemple ses propres coordonnées de localisation, la passerelle peut positionner la zone par rapport à sa propre localisation. Une fois la phase de traçage terminée, la passerelle CPE invite *Optim. Wi-Fi ?* l'utilisateur à activer la procédure d'optimisation de la zone de couverture Wi-Fi. Une fois cette modification terminée *Wi-Fi optim,* la passerelle peut afficher la nouvelle zone de service *Zopt.*

Si la passerelle est déplacée, le changement de sa localisation permet automatiquement de déplacer la zone. Cependant, l'utilisateur peut être invité au déroulement d'une nouvelle étape d'enregistrement par la passerelle CPE de données *zone* descriptives du nouvel environnement. Cette étape d'interaction avec l'utilisateur n'est pas nécessaire si la passerelle embarque un accéléromètre dont le but est d'ajuster la nouvelle localisation de la passerelle pour maintenir le rayonnement des interfaces radio à la zone de service définie au préalable par l'utilisateur.

Grâce à l'activation du procédé selon l'invention, un client optimise la portée du signal Wi-Fi de sa passerelle CPE comme illustré par la figure 4. Il a ainsi en particulier la possibilité de limiter l'accès aux services offerts par ou via sa passerelle CPE aux seuls terminaux TI présents à l'intérieur de la zone de service et dûment habilités à bénéficier des services fournis par ou via la passerelle. Les terminaux TE externes à la zone de service ne sont plus en mesure d'initialiser des tentatives d'attachement radio avec la passerelle CPE.

Le traceur peut être utilisé pour vérifier si la nouvelle zone de service (c.-à-d. après optimisation) est conforme à la zone de service telle que renseignée par un utilisateur.

Une précaution supplémentaire ou alternative pour limiter l'accès aux services offerts par ou via la passerelle CPE aux seuls terminaux localisés dans une zone déterminée consiste à exiger les coordonnées géographiques du terminal lors de son attachement au réseau géré par la passerelle. Cette procédure peut même être déployée si la passerelle CPE dispose de données descriptives de la zone mais ne dispose pas de mécanisme pour limiter la portée du signal radio à cette zone. Le procédé 1 peut ainsi interdire 5 toute autorisation d'association ou de connexion sous réserve de recevoir la localisation du terminal et que cette localisation soit comprise dans la zone.

Comme illustré par la figure 5, les coordonnées géographiques peuvent être fournies par le terminal TE, TI dans le message de demande d'association *ASSOCIATION REQUEST(Coordinates)* ou sur demande explicite de la passerelle CPE comme illustré par la figure 6. Si la passerelle CPE ne reçoit pas les coordonnées du terminal dans le message de demande d'association *ASSOCIATION REQUEST(),* la passerelle sollicite explicitement le terminal pour qu'il lui fournisse ses coordonnées. A cette fin, une demande d'identité *REQUEST IDENTITY*(*Type*=*Coordinates*) est envoyée au terminal avec un code précisant qu'il faut fournir les coordonnées en outre des informations de contrôle d'identité habituelles.

Sur réception des coordonnés venant du terminal, la passerelle CPE vérifie si le terminal se situe à l'intérieur ou à l'extérieur de la zone de service configurée par défaut ou configurée par l'utilisateur. Ainsi, l'accès aux services offerts par ou via la passerelle CPE n'est autorisé suite à cette vérification qu'aux terminaux situés à l'intérieur de la zone de service. Cette mesure renforce le contrôle assuré par le procédé 1 selon l'invention.

Le procédé 1 peut comprendre en outre l'enregistrement 4 par la passerelle résidentielle CPE de préférences *LOCAL_PREF* d'un utilisateur de cette passerelle CPE sur son environnement. Les préférences sur l'environnement ont pour fonction de préciser des modalités de rayonnement de la passerelle résidentielle.

Les préférences *LOCAL_PREF* d'un utilisateur de la passerelle résidentielle sont relatives à ses préférences en ce qui concerne l'activation ou la désactivation de l'interface Wi-Fi de sa propre passerelle résidentielle. Ainsi, *LOCAL_PREF* se rapporte aux plages d'activation de l'interface Wi-Fi de sa passerelle CPE.

Selon un mode de réalisation, les connexions provenant d'un terminal situé en dehors d'une zone de service sont relayées par la passerelle CPE vers un serveur dédié de l'opérateur d'un réseau de communication auquel accède la passerelle comme illustré par la figure 7. Ce serveur est responsable de la détection de fraude et de la collecte d'informations qui permettent d'identifier un utilisateur malveillant (collecte d'adresses MAC, simulation d'une tentative d'accès réussie au réseau, etc.). En référence à l'exemple illustré par la figure 7, la passerelle CPE redirige les connexions reçues d'un terminal TE vers un serveur SERV de l'opérateur à l'aide de filtres qui sont activés dans la passerelle CPE. Le trafic issu du terminal externe TE est alors envoyé vers une plateforme P dédiée de l'opérateur pour des traitements plus avancés comme, par exemple, la collecte de données utiles pour identifier l'utilisateur TE, la sauvegarde d'une trace des tentatives de connexions frauduleuses, etc. Etant donné que la redirection vers une plateforme de l'opérateur peut consommer beaucoup de ressources de la passerelle CPE, cette procédure peut être activée/désactivée à la demande, pour une partie du trafic, ou selon d'autres critères spécifiques à la passerelle CPE ou instruits par l'opérateur.

Dans le cas d'un réseau d'objets connectés, (fournissant un service reposant sur l'Internet des objets ou IoT (Internet of Things)), un contrôleur de la gestion de ces objets est utilisé pour rendre un service (gestion du système d'éclairage, gestion du système de chauffage, gestion des détecteurs de fumée ou de mouvement, etc.) accessible au sein de la zone de service. Ce contrôleur peut être embarqué dans la passerelle ou dans un autre équipement électronique. La passerelle embarquant une fonction actionneur (« actuator ») ou contrôleur est capable de générer des commandes destinées à modifier la portée des objets connectés au sein d'un réseau auquel la passerelle est également connectée. En effet, la très grande majorité des objets connectés embarquent un microcontrôleur MCU (ou Micro Controller Unit) et un régulateur LDO (Low Dropout Voltage). Le microcontrôleur MCU permet en particulier de gérer la puissance d'émission des composants radio mais également l'énergie consommée. Par exemple, on peut définir un «cycle de travail» (duty cycle) qui permet d'optimiser la consommation d'énergie de l'objet moyennant la définition et la configuration des états TX (Transmit), RX (Receive), idle (stand-by) ou mise en sommeil. Le régulateur LDO peut être paramétré pour permettre d'optimiser la durée de vie des batteries (par ex lorsque les batteries sont des piles AA ou AAA) embarquées dans l'objet en jouant notamment sur la puissance du signal émis. Le déploiement de tels objets connectés fut effectué d'abord dans un contexte industriel (réseaux de capteurs sur un site de production) puis métropolitain (gestion du système d'éclairage des sites olympiques de Pékin en 2008, par exemple) et puis peu à peu domestique. La portée des ondes générées par les objets connectés est ainsi calibrée par le contrôleur selon la zone de couverture du ou des services fournis par les objets. Si le contrôleur est embarqué dans une passerelle, les zones couvertes par ces objets peuvent constituer une sous-zone de la zone de service calibrée par la passerelle. Chaque objet est donc un dispositif dont le procédé peut adapter le signal émis.

Cette sous-zone est par exemple délimitée par la localisation des capteurs selon l'aménagement du logement et la nature du service qu'ils fournissent. Toutefois, les risques sécuritaires liés au déploiement d'un réseau d'objets connectés imposent que la zone de service ne soit pas un espace isotrope : en effet, une direction au sein de l'espace correspondant à la zone de service doit toujours être privilégiée pour s'assurer que seul le contrôleur de l'utilisateur est dûment habilité à envoyer des commandes vers l'ensemble des objets connectés placés sous sa responsabilité d'exploitation.

Cette précaution permet notamment de minimiser le risque d'attaques liées à la présence d'équipements (extérieurs) susceptibles de générer des commandes vers les objets connectés lorsque ces équipements sont localisés à proximité (par exemple un drone situé à proximité de la résidence de l'utilisateur) voire sont localisés dans la zone de service délimitée par la passerelle (par exemple, à cause de la présence d'un visiteur disposant d'un smartphone embarquant la fonction de contrôleur).

Le calibrage repose sur l'envoi par le contrôleur d'un premier message *SET_DIRECTION()* destiné à informer les objets connectés de la direction privilégiée dans l'espace au sein de la zone de service (nord, nord-est, est, sud, sud-ouest, etc.) pour communiquer avec le contrôleur en vertu de la localisation de l'objet connecté. Ensuite, le calibrage de la portée des signaux émis par les objets connectés repose sur l'envoi d'un message *SET_RANGE()* par le contrôleur.

Une variante consiste à inclure dans les messages de contrôle les coordonnées géographiques du contrôleur. La transmission de ces coordonnées permet à l'objet connecté de vérifier si le contrôleur se situe dans la zone de service ou à l'extérieur sachant que l'objet connait la zone de service. Les primitives utilisées pour communiquer ces coordonnées sont similaires à celles déjà décrites pour le cas de la passerelle CPE. Dans le cas où le contrôleur est localisé en dehors de la zone déterminée de service, l'objet connecté peut rejeter toute requête ou commande du contrôleur et éviter ainsi une utilisation frauduleuse.

La figure 9 illustre la structure simplifiée d'une passerelle CPE résidentielle mettant en œuvre un procédé de contrôle selon l'un des modes de réalisation décrits ci-dessus.

La passerelle CPE selon un mode de réalisation de l'invention comprend une mémoire MEM comprenant par exemple une mémoire tampon (RAM), des moyens d'émission et de réception EM/RE d'un signal radio et une unité de traitement µP équipée par exemple d'un microprocesseur et pilotée par un programme d'ordinateur Pg mettant en œuvre le procédé de contrôle.

A l'initialisation, les instructions de code du programme d'ordinateur Pg sont par exemple chargées dans la mémoire tampon avant d'être exécutées par le microprocesseur de l'unité de traitement µP (calculateur). Le microprocesseur de l'unité de traitement µP met en œuvre les étapes du procédé de contrôle selon les instructions du programme d'ordinateur Pg pour exécuter par l'unité de traitement µP la détermination d'un niveau de signal radio émis par la passerelle CPE en limite d'une zone déterminée et la commande d'adaptation *REDUCE_Cde* de la portée du signal radio émis par la passerelle en fonction de la comparaison du niveau de signal et d'un seuil déterminé.

A cette fin, la passerelle est telle que les moyens d'émission EM/RE sont adaptés pour adapter le signal émis en fonction de la commande d'adaptation *REDUCE_Cde.* La passerelle peut en outre comprendre une interface IHM pour que l'utilisateur saisisse les données *Zone* descriptives de son environnement résidentiel ainsi qu'un espace mémoire d'enregistrement de ces informations.

Ces moyens sont pilotés par le microprocesseur de l'unité de traitement µP.

Les exemples cités dans la description de modes de réalisation couvrent essentiellement le cas de réduction de la portée d'un signal radio, mais le procédé peut être appliqué pour des cas d'usage qui nécessitent l'augmentation de la portée d'un signal.

## Revendications

1. Procédé (1) de contrôle d'un signal radio émis par un objet connecté pour adapter sa portée selon une zone de service, **caractérisé en ce que** le procédé comprend :
- enregistrement (4) par une passerelle résidentielle de données (zone) descriptives d'un environnement résidentiel de la passerelle pour déterminer des limites d'une zone de service de l'objet,
- détermination (2) par un contrôleur embarqué dans la passerelle d'un niveau de signal radio émis par l'objet en limite de la zone de service de l'objet,
- commande (*REDUCE_Cde*) par le contrôleur d'une adaptation (3) de la portée du signal radio émis par l'objet pour que le niveau de signal radio émis en limite de la zone de service de l'objet soit inférieur à un seuil minimal de détection.

2. Procédé (1) de contrôle d'un signal radio émis selon la revendication 1, selon lequel les données (zone) descriptives d'un environnement résidentiel de la passerelle permettent de délimiter des limites d'une zone de service de la passerelle.

3. Procédé (1) de contrôle d'un signal radio émis selon la revendication 1 ou 2, selon lequel la zone de service de l'objet est une sous-zone d'une zone de service de la passerelle.

4. Procédé (1) de contrôle d'un signal radio émis selon l'une des revendications 1 à 3, selon lequel la zone de service de la passerelle est déterminée en recevant et utilisant des informations de localisation transmises par un terminal mobile déplacé entre des points à la limite de la zone à délimiter.

5. Procédé (1) de contrôle d'un signal radio émis selon l'une des revendications 2 à 4, comprenant en outre :
- détermination (2) par le contrôleur d'un niveau de signal radio émis par la passerelle en limite de la zone de service de la passerelle,
- commande (*REDUCE_Cde*) par le contrôleur d'une adaptation (3) de la portée du signal radio émis par la passerelle en fonction de la comparaison du niveau de signal radio émis en limite de la zone de service de la passerelle et d'un seuil minimal de détection pour une association avec cette passerelle.

6. Procédé (1) de contrôle d'un signal radio selon la revendication 1, selon lequel l'enregistrement intervient via une interface de la passerelle qui lorsqu'elle est graphique permet d'afficher la zone de service.

7. Procédé (1) de contrôle d'un signal radio émis selon l'une des revendications 2 à 5, comprenant en outre :
- envoi d'une requête demandant sa localisation à tout terminal cherchant à s'associer à la passerelle,
- autorisation de l'association du terminal à la passerelle uniquement s'il est localisé dans la zone de service de la passerelle.

8. Procédé (1) de contrôle d'un signal radio émis selon l'une des revendications 2 à 5, comprenant en outre :
- réception d'une requête d'association provenant d'un terminal comprenant la localisation de ce terminal,
- autorisation de l'association du terminal à la passerelle uniquement s'il est localisé dans la zone de service de la passerelle.

9. Procédé (1) de contrôle d'un signal radio selon l'une des revendications 1 à 8, comprenant en outre :
- enregistrement (4) par la passerelle résidentielle de préférences (*LOCAL_PREF*) d'un utilisateur sur son environnement.

10. Procédé (1) de contrôle d'un signal radio émis selon l'une des revendications 1 à 9, selon lequel la passerelle relaye une demande de connexion d'un terminal localisé en dehors de la zone de service de l'objet vers un serveur d'un réseau auquel accède la passerelle pour que le serveur évalue s'il y a fraude et, en cas de demande frauduleuse, le procédé comprend une redirection du trafic du terminal vers une plateforme de service dédiée.

11. Procédé (1) de contrôle d'un signal radio selon l'une des revendications 1 à 7, comprenant en outre :
- fourniture par un contrôleur à l'objet d'informations sur sa localisation,
- rejet par l'objet de toute requête ou commande venant du contrôleur si ce dernier est localisé en dehors de la zone de service de l'objet.

12. Procédé (1) de contrôle d'un signal radio émis selon l'une des revendications 1 à 11 selon lequel la comparaison à un seuil est répétée.

13. Passerelle (CPE) destinée à être connectée à un réseau de communication comprenant :
- des moyens d'émission et de réception (EM/RE) d'un signal radio,
**caractérisée en ce qu'**elle comprend en outre :
- une mémoire (MEM) pour mémoriser des données descriptives de l'environnement résidentiel de la passerelle pour déterminer des limites d'une zone de service d'un objet connecté,
- un calculateur (µP) pour déterminer le niveau de signal radio émis par l'objet à la limite de la zone de service de l'objet et
**en ce que** le calculateur est programmé pour commander (*REDUCE_Cde*) l'adaptation de la portée du signal radio émis par l'objet pour que le niveau de signal radio émis en limite de la zone de service de l'objet soit inférieur à un seuil minimal de détection.

14. Système de communication comprenant une passerelle résidentielle (CPE) pour le contrôle d'un signal radio émis par un objet connecté **caractérisé en ce que** la passerelle est selon la revendication 13 et **en ce que** la passerelle comprend en outre une interface pour l'enregistrement de données descriptives de l'environnement résidentiel de la passerelle pour déterminer des limites d'une zone de service de l'objet et une interface pour afficher cette zone.

15. Programme d'ordinateur comportant des instructions pour la mise en œuvre d'un procédé selon l'une quelconque des revendications 1 à 12 lorsque ce programme est exécuté par un processeur.

## Patentansprüche

1. Verfahren (1) zur Steuerung eines von einem verbundenen Objekt gesendeten Funksignals, um seine Reichweite gemäß einem Dienstbereich anzupassen, **dadurch gekennzeichnet, dass** das Verfahren Folgendes beinhaltet:
- Aufzeichnen (4), durch ein Heim-Gateway, von Daten (Bereich), die eine Heimumgebung des Gateways beschreiben, um Grenzen eines Dienstbereichs des Objekts zu bestimmen,
- Bestimmen (2), durch eine in dem Gateway enthaltene Steuereinheit, eines Pegels eines von dem Objekt gesendeten Funksignals an der Grenze des Dienstbereichs des Objekts,
- Anweisen (*REDUCE_Cde*)*,* durch die Steuereinheit, einer Anpassung (3) der Reichweite des von dem Objekt gesendeten Funksignals, damit der Pegel eines gesendeten Funksignals an der Grenze des Dienstbereichs des Objekts kleiner als ein Mindestdetektionsschwellenwert ist.

2. Verfahren (1) zur Steuerung eines gesendeten Funksignals nach Anspruch 1, wobei es die Daten (Bereich), die eine Heimumgebung des Gateways beschreiben, ermöglichen, Grenzen eines Dienstbereichs des Gateways abzugrenzen.

3. Verfahren (1) zur Steuerung eines gesendeten Funksignals nach Anspruch 1 oder 2, wobei der Dienstbereich des Objekts ein Unterbereich eines Dienstbereichs des Gateways ist.

4. Verfahren (1) zur Steuerung eines gesendeten Funksignals nach einem der Ansprüche 1 bis 3, wobei der Dienstbereich des Gateways bestimmt wird, indem Lokalisierungsinformationen, die von einem mobilen Endgerät, das zwischen Punkten an der Grenze des abzugrenzenden Bereichs bewegt wird, übertragen werden, empfangen und verwendet werden.

5. Verfahren (1) zur Steuerung eines gesendeten Funksignals nach einem der Ansprüche 2 bis 4, das ferner Folgendes beinhaltet:
- Bestimmen (2), durch die Steuereinheit, eines Pegels eines von dem Gateway gesendeten Funksignals an der Grenze des Dienstbereichs des Gateways,
- Anweisen (*REDUCE_Cde*)*,* durch die Steuereinheit, einer Anpassung (3) der Reichweite des von dem Gateway gesendeten Funksignals in Abhängigkeit von dem Vergleich des Pegels eines gesendeten Funksignals an der Grenze des Dienstbereichs des Gateways mit einem Mindestdetektionsschwellenwert für eine Assoziierung mit diesem Gateway.

6. Verfahren (1) zur Steuerung eines Funksignals nach Anspruch 1, wobei das Aufzeichnen über eine Schnittstelle des Gateways erfolgt, die, wenn sie grafisch ist, ein Anzeigen des Dienstbereichs gestattet.

7. Verfahren (1) zur Steuerung eines gesendeten Funksignals nach einem der Ansprüche 2 bis 5, das ferner Folgendes beinhaltet:
- Senden einer Anfrage, die von jedem Endgerät, das versucht, sich mit dem Gateway zu assoziieren, dessen Lokalisierung abfragt,
- Genehmigen der Assoziierung des Endgeräts mit dem Gateway nur dann, wenn es sich in dem Dienstbereich des Gateways befindet.

8. Verfahren (1) zur Steuerung eines gesendeten Funksignals nach einem der Ansprüche 2 bis 5, das ferner Folgendes beinhaltet:
- Empfangen einer Assoziierungsanfrage von einem Endgerät, die die Lokalisierung dieses Endgeräts beinhaltet,
- Genehmigen der Assoziierung des Endgeräts mit dem Gateway nur dann, wenn es sich in dem Dienstbereich des Gateways befindet.

9. Verfahren (1) zur Steuerung eines Funksignals nach einem der Ansprüche 1 bis 8, das ferner Folgendes beinhaltet:
- Aufzeichnen (4), durch das Heim-Gateway, von Präferenzen *(LOCAL_PREF)* eines Nutzers in Bezug auf seine Umgebung.

10. Verfahren (1) zur Steuerung eines gesendeten Funksignals nach einem der Ansprüche 1 bis 9, wobei das Gateway eine Verbindungsaufforderung eines Endgeräts, das sich außerhalb des Dienstbereichs des Objekts befindet, an einen Server eines Netzwerks weiterleitet, auf den das Gateway zugreift, damit der Server feststellt, ob ein Betrug vorliegt, und wobei das Verfahren im Fall einer betrügerischen Aufforderung eine Umleitung des Verkehrs von dem Endgerät zu einer dedizierten Dienstplattform beinhaltet.

11. Verfahren (1) zur Steuerung eines Funksignals nach einem der Ansprüche 1 bis 7, das ferner Folgendes beinhaltet:
- Liefern, durch eine Steuereinheit an das Objekt, von Informationen über ihre Lokalisierung,
- Zurückweisen, durch das Objekt, jeglicher Anfrage oder Anweisung, die von der Steuereinheit kommt, falls sich letztere außerhalb des Dienstbereichs des Objekts befindet.

12. Verfahren (1) zur Steuerung eines gesendeten Funksignals nach einem der Ansprüche 1 bis 11, wobei der Vergleich mit einem Schwellenwert wiederholt wird.

13. Gateway (CPE), das dazu bestimmt ist, mit einem Kommunikationsnetzwerk verbunden zu sein, beinhaltend:
- Mittel zum Senden und Empfangen (EM/RE) eines Funksignals,
**dadurch gekennzeichnet, dass** es ferner Folgendes beinhaltet:
- einen Speicher (MEM), um Daten, die die Heimumgebung des Gateways beschreiben, zu speichern, um Grenzen eines Dienstbereichs eines verbundenen Objekts zu bestimmen,
- eine Recheneinheit (µP), um den Pegel eines von dem Objekt gesendeten Funksignals an der Grenze des Dienstbereichs des Objekts zu bestimmen, und
dass die Recheneinheit dazu programmiert ist, die Anpassung der Reichweite des von dem Objekt gesendeten Funksignals anzuweisen (*REDUCE_Cde*) , damit der Pegel eines gesendeten Funksignals an der Grenze des Dienstbereichs des Objekts kleiner als ein Mindestdetektionsschwellenwert ist.

14. Kommunikationssystem, das ein Heim-Gateway (CPE) zur Steuerung eines von einem verbundenen Objekt gesendeten Funksignals beinhaltet, **dadurch gekennzeichnet, dass** das Gateway Anspruch 13 entspricht und dass das Gateway ferner eine Schnittstelle zum Aufzeichnen von Daten, die die Heimumgebung des Gateways beschreiben, um Grenzen eines Dienstbereichs des Objekts zu bestimmen, und eine Schnittstelle zum Anzeigen dieses Bereichs beinhaltet.

15. Computerprogramm, das Anweisungen zum Durchführen eines Verfahrens nach einem der Ansprüche 1 bis 12 umfasst, wenn dieses Programm von einem Prozessor ausgeführt wird.

## Claims

1. Method (1) for controlling a radio signal emitted by a connected object to adapt its range according to a service zone, **characterized in that** the method comprises:
- storage (4) by a residential gateway of data (zone) descriptive of a residential environment of the gateway to determine limits of a service zone of the object,
- determination (2) by a controller embedded in the gateway of a radio signal level emitted by the object at the limit of the service zone of the object,
- commanding *(REDUCE_Cde)* by the controller of an adaptation (3) of the range of the radio signal emitted by the object so that the emitted radio signal level at the limit of the service zone of the object is below a minimum detection threshold.

2. Method (1) for controlling an emitted radio signal according to Claim 1, wherein the data (zone) descriptive of a residential environment of the gateway make it possible to delimit limits of a service zone of the gateway.

3. Method (1) for controlling an emitted radio signal according to Claim 1 or 2, wherein the service zone of the object is a subzone of a service zone of the gateway.

4. Method (1) for controlling an emitted radio signal according to one of Claims 1 to 3, wherein the service zone of the gateway is determined by receiving and using location information transmitted by a mobile terminal moved around between points at the limit of the zone to be delimited.

5. Method (1) for controlling an emitted radio signal according to one of Claims 2 to 4, further comprising:
- determination (2) by the controller of a radio signal level emitted by the gateway at the limit of the service zone of the gateway,
- commanding *(REDUCE_Cde)* by the controller of an adaptation (3) of the range of the radio signal emitted by the gateway as a function of the comparison of the emitted radio signal level at the limit of the service zone of the gateway and a minimum detection threshold for an association with this gateway.

6. Method (1) for controlling a radio signal according to Claim 1, wherein the storage takes place via an interface of the gateway which, when it is graphical, allows the service zone to be displayed.

7. Method (1) for controlling an emitted radio signal according to one of Claims 2 to 5, further comprising:
- sending of a request requesting its location of any terminal seeking to be associated with the gateway,
- authorization of the association of the terminal with the gateway only if it is located within the service zone of the gateway.

8. Method (1) for controlling an emitted radio signal according to one of Claims 2 to 5, further comprising:
- reception of an association request originating from a terminal comprising the location of this terminal,
- authorizing of the association of the terminal with the gateway only if it is located within the service zone of the gateway.

9. Method (1) for controlling a radio signal according to one of Claims 1 to 8, further comprising:
- storage (4) by the residential gateway of preferences (*LOCAL_PREF*) of a user concerning his or her environment.

10. Method (1) for controlling an emitted radio signal according to one of Claims 1 to 9, wherein the gateway relays a connection request from a terminal located outside of the service zone of the object to a server of a network to which the gateway accesses for the server to assess whether there is fraud and, in the case of a fraudulent request, the method comprises a redirection of the traffic from the terminal to a dedicated service platform.

11. Method (1) for controlling a radio signal according to one of Claims 1 to 7, further comprising:
- provision by a controller to the object of information on its location,
- rejection by the object of any request or command coming from the controller if the latter is located outside of the service zone of the object.

12. Method (1) for controlling an emitted radio signal according to one of Claims 1 to 11, wherein the comparison to a threshold is repeated.

13. Gateway (CPE) intended to be connected to a communication network comprising:
- means for transmitting and receiving (EM/RE) a radio signal,
**characterized in that** it further comprises:
- a memory (MEM) for memorizing data descriptive of the residential environment of the gateway to determine limits of a service zone of a connected object,
- a computer (µP) for determining the radio signal level emitted by the object at the limit of the service zone of the object and
**in that** the computer is programmed to command *(REDUCE_Cde)* the adaptation of the range of the radio signal emitted by the object for the emitted radio signal level at the limit of the service zone of the object to be below a minimum detection threshold.

14. Communication system comprising a residential gateway (CPE) for controlling a radio signal emitted by a connected object, **characterized in that** the gateway is in accordance with Claim 13 and **in that** the gateway further comprises an interface for the storage of data descriptive of the residential environment of the gateway to determine limits of a service zone of the object and an interface for displaying this zone.

15. Computer program comprising instructions for the implementation of a method according to any one of Claims 1 to 12 when this program is run by a processor.
